# EUROPÄISCHE PATENTSCHRIFT

(11) **EP 3 412 135 B1**
(45) Veröffentlichungstag und Bekanntmachung des Hinweises auf die Patenterteilung: **14.09.2022**
(21) Anmeldenummer: 17400035.6
(22) Anmeldetag: 09.06.2017
(51) Int. Cl.: A01D 34/00, B60L 53/12, B60L 53/14, B60L 53/66, A47L 9/28, G05D 1/02

(54) **BODENBEARBEITUNGSSYSTEM MIT MINDESTENS EINER LADESTATION MIT EINER DATENVERBINDUNG**
FLOOR TREATMENT SYSTEM WITH AT LEAST A CHARGING STATION WITH DATA LINK
SYSTÈME DE TRAITEMENT DE SOL AVEC AU MOINS UNE STATION DE CHARGE COMPRENANT UNE LIAISON DE DONNÉES

(43) Veröffentlichungstag der Anmeldung: 12.12.2018
(73) Patentinhaber: Andreas Stihl AG & Co. KG, 71336 Waiblingen (DE)
(72) Erfinder: Melser, Klaus, 6336 Langkampfen (AT); Ritzer, Peter, 6341 Ebbs (AT); Matt, Sebastian, 6330 Kufstein (AT); Zöttl, Samuel, 6092 Birgitz (AT)
(74) Vertreter: Wasmuth, Rolf

(56) Entgegenhaltungen:
- EP-A1- 2 656 718
- EP-A2- 1 933 467
- EP-A2- 2 390 741
- WO-A1-2013/141206
- WO-A1-2016/019902
- WO-A1-2016/103068
- WO-A1-2016/178616
- US-B2- 8 106 626

## Beschreibung

Die Erfindung betrifft ein Bodenbearbeitungssystem aus mindestens einem selbstfahrenden Bodenbearbeitungsgerät mit einem Antrieb, einer Steuereinheit und einem bordeigenen Akku zur Energieversorgung des Bodenbearbeitungsgerätes. Ein Arbeitsbereich des Bodenbearbeitungsgerätes ist durch eine Randbegrenzung bestimmt, wobei das Bodenbearbeitungsgerät ausgebildet ist, innerhalb des Arbeitsbereichs selbstständig einen Fahrweg zu fahren. Es ist mindestens eine Ladestation zum Aufladen des Akkus des Bodenbearbeitungsgerätes vorgesehen, die über eine elektrische, energieübertragende Ladeverbindung von der Ladestation auf das Bodenbearbeitungsgerät verfügt. Aus der WO 2016/178616 A1 oder der WO 2016/103068 A1 ist bekannt, ein selbstfahrendes Bodenbearbeitungsgerät in einem Arbeitsbereich zu betreiben, der durch einen Begrenzungsdraht umgeben ist. Das Bodenbearbeitungsgerät fährt innerhalb eines Arbeitsbereichs selbstständig einen zufälligen, vorgegebenen oder selbstständig geplanten Fahrweg ab. Eine Basisstation des Systems ist elektrisch an den Begrenzungsdraht angeschlossen und sendet auf dem Begrenzungsdraht ein Drahtsignal, dessen elektromagnetisches Feld in eine Empfangsspule des Bodenbearbeitungsgerätes ein Empfangssignal induziert. Das Empfangssignal wird zur Steuerung des Bodenbearbeitungsgerätes in einer Steuereinheit verarbeitet und das Bodenbearbeitungsgerät mit dem Ziel gesteuert, insbesondere den Arbeitsbereich nicht zu verlassen. Zum Aufladen des Akkus ist die mit dem Begrenzungsdraht verbundene Basisstation zugleich als Ladestation ausgebildet.

Die WO 2016/019902 A1 zeigt ein Bodenbearbeitungsgerät, welches über eine kontaktlose Verbindung zu laden ist. In der EP 2 656 718 A1 wird das Bodenbearbeitungsgerät über Kontaktstifte mit der Ladestation verbunden. Die EP 2 390 741 A2 gibt allgemein die Möglichkeit der Verwendung von wiederaufladbaren Energiespeichern bei Bodenbearbeitungsgeräten an, ohne konstruktiv darauf einzugehen.

Die WO 2013/141206 A1 und US 8 106 626 B2 beschreiben weitere bekannte Bodenbearbeitungsgeräte.

Die EP 1 933 467 A2 beschreibt ein Bodenbearbeitungsgerät, das über mechanische Ladekontakte durch eine Ladestation geladen werden kann. Über die Ladekontakte ist eine bidirektionale Kommunikation zwischen dem Bodenbearbeitungsgerät und der Ladestation gegeben. Um die empfangenen Daten zu verarbeiten, muss entsprechende Hardware verbaut sein.

Es wurden auch Bodenbearbeitungssysteme aus mehreren selbstfahrenden Bodenbearbeitungsgeräten vorgeschlagen, insbesondere ein System aus mehreren, gemeinsam eine Arbeitsfläche bearbeitenden Rasenmähern. Zum Aufladen der bordeigenen Akkus fahren die Bodenbearbeitungsgeräte die Ladestation an und verlassen diese erst, wenn der bordeigene Akku auf einen vorgegebenen Ladezustand geladen ist.

Bearbeiten mehrere Bodenbearbeitungsgeräte als Team einen gemeinsamen Arbeitsbereich, so ist z. B. die benötigte Arbeitszeit abhängig von der Anzahl der im Team arbeitenden Rasenmäher. Muss ein Bodenbearbeitungsgerät z. B. aufgrund einer sinkenden Ladekapazität eines Akkus häufiger geladen werden als andere, ändern sich die Betriebszeiten der einzelnen Bodenbearbeitungsgeräte. Zur Verwaltung und Steuerung des Teams müssen daher die in einem Bodenbearbeitungsgerät abgespeicherten Betriebsvariablen angepasst werden. Darüber hinaus muss in zeitlich unterschiedlichen Abständen die Betriebssoftware eines Bodenbearbeitungsgerätes und/oder der Basisstation oder einer Ladestation aktualisiert, geändert oder ersetzt werden. Dies erfordert einerseits einen hohen Zeitaufwand und andererseits meist auch spezielle technische Kenntnisse. Der Benutzer muss zur Aktualisierung einer Betriebs software oft selbst eingreifen oder aber von Dritten angebotene technische Serviceleistungen nutzen.

Der Erfindung liegt die Aufgabe zugrunde, ein bekanntes Bodenbearbeitungssystem mit zumindest einem Bodenbearbeitungsgerät derart weiterzubilden, dass nicht nur die im Bodenbearbeitungsgerät abgespeicherten Betriebsvariablen einfach anzupassen sind, sondern darüber hinaus auch eine Aktualisierung von Betriebssoftware möglich ist.

Die Aufgabe wird nach den Merkmalen des Anspruchs 1 gelöst.

Die Ladeverbindung zwischen der Ladestation und dem Bodenbearbeitungsgerät wird zugleich als Datenverbindung für die Übermittlung von Datenpaketen genutzt, so dass vor, während oder nach dem Laden des Akkus zwischen dem Bodenbearbeitungsgerät und der Ladestation Datenpakete ausgetauscht werden können.

Dies erweist sich nicht nur bei der Übermittlung von Betriebsvariablen z. B. als Steuersatz im Datenpaket als vorteilhaft, sondern eröffnet zugleich die Möglichkeit, Betriebssoftware, angepasste Dienstprogramme oder benutzerorientierte Applikationen über die Datenverbindung weiterzugeben.

Die Datenverbindung zur Übermittlung von Datenpaketen kann bidirektional sein. Datenpakete können von der Ladestation auf das Bodenbearbeitungsgerät oder von dem Bodenbearbeitungsgerät auf die Ladestation gesendet werden.

Erfindungsgemäß ist als Steuereinheit eine übergeordnete Steuereinheit als ein externer Server vorgesehen, der z. B. über Funk mit der Ladestation verbunden ist. Die Ladestation und/oder das Bodenbearbeitungsgerät sind zweckmäßig mit einer übergeordneten Steuereinheit wie dem Server verbunden, so dass vom Bodenbearbeitungsgerät auf die Ladestation übertragene Datenpakete an den Server weitergegeben und dort verarbeitet werden können. Insbesondere wenn ein Team aus einer beliebigen Anzahl von Bodenbearbeitungsgeräten im Arbeitsbereich betrieben wird, kann die Steuerung und Verwaltung des gesamten Teams über eine externe Steuereinheit wie den Server erfolgen. So können unter Berücksichtigung der empfangenen Datenpakete ausgesuchte Betriebsvariable des Bodenbearbeitungsgerätes angepasst werden, so z. B. die Bearbeitungsdauer entsprechend dem Arbeitsfortschritt angepasst werden. Über den zentralen Server kann eine Anpassung der Betriebszeiten ebenso vorgenommen werden wie eine Änderung einer in dem Bodenbearbeitungsgerät gespeicherten, gerätebezogenen Betriebsvariablen. Die angepassten Betriebsvariablen werden als Datenpakete über die Ladestation auf das in die Ladestation eingefahrene Bodenbearbeitungsgerät vor, während oder im Anschluss an einen Ladevorgang als Datenpaket übertragen und dort in dem Speicher des Bodenbearbeitungsgerätes abgespeichert. Die geänderten Betriebsvariablen können im Bodenbearbeitungsgerät von der geräteinternen Steuereinheit im weiteren Betrieb berücksichtigt und z. B. die Fahrwege entsprechend angepasst werden. Es ist vorgesehen, die von der Ladestation an das Bodenbearbeitungsgerät übermittelten Datenpakete in dem zentralen Server weiter zu verarbeiten.

Nach dem Aufbau des Bodenbearbeitungssystems können die Datenpakete in verschiedenen Übertragungsrichtungen übermittelt werden. So kann ein Datenpaket von der Ladestation über die Ladeverbindung auf das Bodenbearbeitungsgerät und von dort zum Server übertragen werden. Auch kann ein Datenpaket von dem Server an die Ladestation und über die Ladeverbindung auf das Bodenbearbeitungsgerät übertragen werden. Alternativ oder zusätzlich ist auch vorteilhaft, Datenpakete von dem Bodenbearbeitungsgerät und über die Ladeverbindung auf die Ladestation zu übertragen, welche die Datenpakete selbst verarbeitet und/oder über eine Datenverbindung dem externen Server übermittelt, der die Datenpakete auch verarbeiten kann. Eine Datenübermittlung von dem Server auf das Bodenbearbeitungsgerät und über die Ladeverbindung auf die Ladestation kann ebenfalls vorteilhaft sein.

In einer Ausbildung der Erfindung werden neue Datenpakete von der Ladestation zum Bodenbearbeitungsgerät übermittelt. Die vom Bodenbearbeitungsgerät empfangenen Datenpakete werden beim folgenden Betrieb des Bodenbearbeitungsgerätes in der bordeigenen Steuereinheit verarbeitet. Diese neuen Datenpakete können in einer lokalen Steuereinheit der Ladestation zusammengestellt werden. Auch können die neuen Datenpakete z. B. über eine Funkverbindung der Ladestation von einem externen Server übermittelt werden.

Die vom Bodenbearbeitungsgerät zur Ladestation übermittelten Datenpakete werden in einem zentralen Server extern verarbeitet. Bei einem Bodenbearbeitungssystem mit mehreren Bodenbearbeitungsgeräten können so während der Ladezeit des Bodenbearbeitungsgerätes Betriebsdaten des Bodenbearbeitungsgerätes als Datenpakete an einen externen Server übermittelt und dort ausgewertet werden. Die übergeordnete Verarbeitungseinheit kann im Rahmen des Teams aus Bodenbearbeitungsgeräten die Betriebsvariablen entsprechend der empfangenen Datenpaketen geeignet anpassen und über die Ladestation dem noch in der Ladestation stehenden Bodenbearbeitungsgerät übermitteln. Während eines Ladevorgangs können somit Betriebsvariable des zu ladenden Bodenbearbeitungsgerätes übermittelt, ausgewertet und angepasst werden.

In besonderer nicht erfindungsgemäßen Ausgestaltung eines Systems ist vorgesehen, die Ladeverbindung als kontaktlose Ladeverbindung auszubilden. Das kontaktlose Laden des Akkus erfolgt über eine Sendespule in der Ladestation und eine Ladespule im Bodenbearbeitungsgerät. Die Datenverbindung kann über die Sendespule und die Ladespule der Ladeeinrichtung hergestellt werden. Die Datenverbindung ist bevorzugt als eine Nahfeldverbindung ausgebildet.

In Weiterbildung der Erfindung ist die Ladeverbindung als Steckverbindung aus-gebildet. Zweckmäßig besteht die Steckverbindung aus Kontakten, insbesondere aus einer Kontaktnase und einer Kontaktbuchse. Die Kontaktnase ist vorteilhaft an der Ladestation und die Kontaktbuchse am Bodenbearbeitungsgerät ausgebildet. Die Datenverbindung wird dabei über die elektrischen Leistungskontakte der Steckverbindung hergestellt. Hervorzuheben ist, dass die Datenverbindung über die elektrischen Leistungskontakte erfolgt und keine zusätzlichen Datenkontakte notwendig sind. Vorteilhaft ist die Randbegrenzung des Arbeitsbereiches durch einen Begrenzungsdraht gebildet. Dieser Begrenzungsdraht wird insbesondere als Drahtschleife verlegt.

Zweckmäßig ist eine Basisstation vorgesehen, die elektrisch an den Begrenzungsdraht angeschlossen ist und auf dem Begrenzungsdraht ein Drahtsignal sendet. Das auf dem Begrenzungsdraht gesendete Drahtsignal induziert in einer Empfangsspule des Bodenbearbeitungsgerätes ein Empfangssignal. Das Empfangssignal wird in der Steuereinheit des Bodenbearbeitungsgerätes verarbeitet und zur Steuerung des Bodenbearbeitungsgerätes auf seinem Fahrweg innerhalb des Arbeitsbereichs verwendet.

Bevorzugt ist die Basisstation als Ladestation ausgebildet. Insbesondere sind die Basisstation und die Ladestation gleich ausgebildet.

Im Arbeitsbereich werden insbesondere mehrere autonom fahrende Bodenbearbeitungsgeräte angeordnet, die in besonderer Ausgestaltung der Erfindung als selbstfahrende Rasenmäher vorgesehen sind.

In besonderer Weiterbildung der Erfindung ist vorgesehen, dass ein von dem Bodenbearbeitungsgerät über die Datenverbindung gesendetes Datenpaket die Betriebssoftware der Ladestation aktualisiert. So kann ein Bodenbearbeitungsgerät z. B. über eine Funkstrecke mit einem übergeordneten Server verbunden sein, wobei der Server bei einem Aktualisierungsbedarf z. B. einer Firmware oder Betriebssoftware der Ladestation diese Aktualisierung an das Bodenbearbeitungsgerät übermittelt. Die empfangenen Datenpakete werden in einem Speicher des Bodenbearbeitungsgerätes abgespeichert. Sobald das Bodenbearbeitungsgerät in eine Ladestation eingefahren und über die Ladekontakte kontaktiert ist, erfolgt ein Versionsabgleich der auf der Ladestation betriebenen Software mit der auf dem Bodenbearbeitungsgerät gespeicherten Software. Ergibt sich ein Aktualisierungsbedarf der Software auf der Ladestation, werden die auf dem Bodenbearbeitungsgerät gespeicherten Datenpakete über die Leistungskontakte der Ladeverbindung vom Bodenbearbeitungsgerät auf die Ladestation übertragen. Die Übertragung der Datenpakete kann vor, während und/oder nach dem Ladevorgang erfolgen. Das Bodenbearbeitungsgerät ist zugleich ein Datenträger für eine Aktualisierungssoftware.

Es kann auch zweckmäßig sein, dass ein von der Ladestation über die Datenverbindung der Ladeverbindung gesendetes Datenpaket die Firmware oder Betriebssoftware des Bodenbearbeitungsgerätes aktualisiert. Die Ladestation ist hierzu zweckmäßig mit einem Server verbunden, der die auf das Bodenbearbeitungsgerät in Datenpaketen zu übertragende Aktualisierungssoftware vom Server empfängt. Sobald das Bodenbearbeitungsgerät in die Ladestation eingefahren und über die Ladekontakte kontaktiert ist, erfolgt ein Versionsabgleich der auf der Ladestation vorgehaltenen Aktualisierungssoftware mit der auf dem Bodenbearbeitungsgerät betriebenen Software. Ergibt sich ein Aktualisierungsbedarf der Software, werden die auf der Ladestation gespeicherten Datenpakete über die Leistungskontakte der Ladeverbindung von der Ladestation auf das Bodenbearbeitungsgerät übertragen.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: in schematischer Darstellung ein Bodenbearbeitungssystem aus mindestens einem in einem Arbeitsbereich selbstfahrenden Bodenbearbeitungsgerät,
- Fig. 2: in schematischer Darstellung den Aufbau eines Bodenbearbeitungsgerätes am Beispiel eines selbstfahrenden Rasenmähers,
- Fig. 3: in schematischer Darstellung eine Draufsicht auf eine Ladestation mit einer elektrischen Steckverbindung als Ladeverbindung,
- Fig. 4: eine Draufsicht auf eine Ladestation mit einer nicht erfindungsgemäßen kontaktlosen Ladeverbindung.

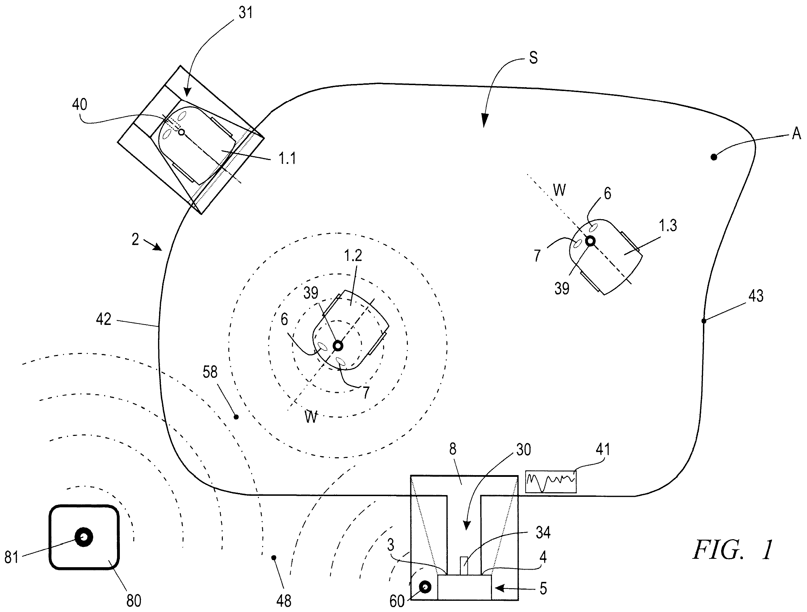

Das in Fig. 1 dargestellte Bodenbearbeitungssystem S umfasst zumindest ein selbstfahrendes Bodenbearbeitungsgerät 1.1, 1.2 und 1.3 zur Bearbeitung eines vorgegebenen Arbeitsbereiches A. Im gezeigten Ausführungsbeispiel sind mehrere, insbesondere drei Bodenbearbeitungsgeräte 1.1, 1.2 und 1.3 zur gemeinsamen Bearbeitung des vorgegebenen Arbeitsbereiches A gezeigt. Das Bodenbearbeitungssystem S kann weniger oder auch mehr Bodenbearbeitungsgeräte umfassen. Jedes einzelne Bodenbearbeitungsgerät 1.1, 1.2 und 1.3 arbeitet autonom und fährt innerhalb des Arbeitsbereiches A selbstständig einen zufälligen, vorgegebenen oder selbstständig geplanten Fahrweg W ab.

Im gezeigten Ausführungsbeispiel nach Fig. 1 ist der Arbeitsbereich A des Bodenbearbeitungssystems S durch eine Randbegrenzung 2 begrenzt, die vielfältig ausgebildet sein kann. So kann im Rahmen der Erfindung eine virtuelle Randbegrenzung 2 vorgesehen sein, die z. B. über Navigationsdaten wie Satellitennavigation oder Funkbaken eingerichtet ist. Auch besteht die Möglichkeit der Abspeicherung einer internen Karte im Bodenbearbeitungsgerät, anhand der sich das Bodenbearbeitungsgerät orientiert und in der die Randbegrenzung eingetragen ist. Eine weitere Möglichkeit der Randbegrenzung ist - insbesondere bei Rasenmähern als Bodenbearbeitungsgeräte - eine optische Erkennung der Rasenkante als Randbegrenzung. So kann ein autonom fahrender Rasenmäher mit einer Kamera versehen sein, die den Rand der zu bearbeitenden Rasenfläche als Randbegrenzung detektiert. Wird der Rand der Rasenfläche erkannt, steuert der Rasenmäher auf die Rasenfläche zurück.

Im gezeigten Ausführungsbeispiel nach Fig. 1 ist die Randbegrenzung 2 durch einen Begrenzungsdraht 43 gebildet, der insbesondere als Drahtschleife 42 verlegt ist. Die Anschlussenden 3, 4 des Begrenzungsdrahtes 43 sind an eine Sendeeinheit 5 angeschlossen, die in einer Basisstation 8 vorgesehen ist. Die Sendeeinheit 5 sendet - bevorzugt in zeitlich festen Abständen - elektrische Drahtsignale 41 auf den Begrenzungsdraht 43. Das auf dem Begrenzungsdraht 43 gesendete Drahtsignal 41 induziert in einer Empfangsspule 6, 7 des Bodenbearbeitungsgerätes 1.1, 1.2 und 1.3 ein Empfangssignal. Dieses Empfangssignal wird im Bodenbearbeitungsgerät 1.1, 1.2, 1.3 verarbeitet und zur Steuerung des Bodenbearbeitungsgerätes 1.1, 1.2, 1.3 auf seinem Fahrweg W verwendet. Alle in dem Arbeitsbereich A fahrenden Bodenbearbeitungsgeräte 1.1 bis 1.3 orientieren sich anhand des auf dem Begrenzungsdraht 43 gesendeten Drahtsignals 41.

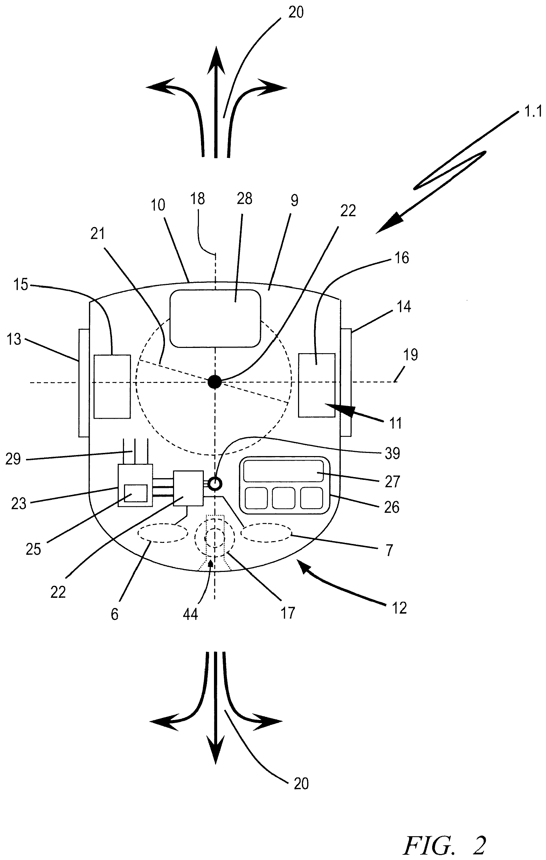

Die in Fig. 2 gezeigte Basisstation 8 ist vorteilhaft zugleich als Ladestation 30 ausgebildet.

In Fig. 2 ist in Draufsicht schematisch ein Bodenbearbeitungsgerät 1.1 gezeigt, welches als Rasenmäher 10 ausgebildet ist. Die Darstellung des autonom arbeitenden, selbstfahrenden Rasenmähers ist beispielhaft. Das Bodenbearbeitungsgerät 1.1 kann auch als Vertikutierer, Kehrmaschine, Staubsauger, autonom fahrender Aufsitzmäher oder dgl. Bodenbearbeitungsgerät ausgebildet sein.

Das in Fig. 2 als Rasenmäher 10 dargestellte Bodenbearbeitungsgerät 1.1 besteht im Wesentlichen aus einem Fahrwerk mit hinteren Antriebsrädern 13, 14 mit einem Antrieb 11. Im gezeigten Ausführungsbeispiel ist jedem Antriebsrad 13, 14 ein elektrischer Antriebsmotor 15, 16 zugeordnet, der die Antriebsräder 13 und 14 zur Richtungssteuerung des Rasenmähers 10 mit unterschiedlicher Drehzahl und/oder in unterschiedlicher Drehrichtung antreiben kann.

Im vorderen Bereich 12 des Gehäuses 9 des Rasenmähers ist ein insbesondere selbstlenkendes drittes Rad 17 vorgesehen. Das dritte Rad 17 liegt bevorzugt auf einer Längsmittelachse 18 des Gehäuses 9. Die Ausbildung eines Fahrgestells mit vier Rädern kann zweckmäßig sein.

Die Antriebsräder 13, 14 des gezeigten Bodenbearbeitungsgerätes 1.1 drehen um eine gemeinsame Antriebsachse 19. Die Antriebsachse 19 liegt - in Draufsicht auf den Rasenmäher 10 nach Fig. 2 - insbesondere rechtwinklig zur Längsmittelachse 18 des Gehäuses 9. Für eine Geradeausfahrt sind die Antriebsräder 13 und 14 über ihre elektrischen Antriebsmotoren 15 und 16 synchron anzutreiben. Für eine Kurvenfahrt werden die Antriebsräder 13, 14 durch ihre Antriebsmotoren 15, 16 z. B. mit unterschiedlichen Drehzahlen angetrieben. Durch den Antrieb 11 ist das Bodenbearbeitungsgerät 1.1 in jeder gewünschten Fahrtrichtung 20 gemäß den dargestellten Pfeilen vorwärts oder rückwärts zu bewegen.

Im Ausführungsbeispiel nach Fig. 2 weist das Bodenbearbeitungsgerät 1.1 zwischen den Antriebsrädern 13 und 14 ein Arbeitswerkzeug 21 auf. Im Ausführungsbeispiel als Rasenmäher 10 ist das Arbeitswerkzeug 21 ein um eine senkrechte Drehachse 22 rotierendes Schneidmesser.

Die Steuerung der elektrischen Antriebsmotoren 15 und 16 erfolgt über eine bordeigene Steuereinheit 23, die über schematisch angedeutete elektrische Leitungen 29 mit den elektrischen Antriebsmotoren 15 und 16 verbunden ist.

Das auf der Drahtschleife 42 des Begrenzungsdrahtes 43 gesendete Drahtsignal 41 wird in den Empfangsspulen 6 und 7 des Bodenbearbeitungsgerätes 1.1 empfangen. Die Empfangsspulen 6 und 7 liegen im vorderen Bereich 12 des Gehäuses 9 jeweils auf einer Seite der Längsmittelachse 18 des Bodenbearbeitungsgerätes 1.1. Die in den Empfangsspulen 6 und 7 induzierten Empfangssignale werden bevorzugt einer gemeinsamen Auswerteeinheit 24 zugeführt, die mit der Steuereinheit 23 verbunden ist. Vorteilhaft umfasst die Steuereinheit 23 einen Speicher 25 für eine Betriebsvariable, die zum Betrieb des Bodenbearbeitungsgerätes 1.1 zweckmäßig ist. Eine derartige Betriebsvariable kann z. B. die Startzeit des Betriebs sein, die Dauer des Betriebs, die Schnitthöhe (bei einer Ausbildung als Rasenmäher), der Fahrweg zu einer Ladestation, ein Mähplan als Wochenplan oder dgl. Betriebsvariable.

Nach Fig. 2 ist zur Eingabe von Informationen zu Betriebsvariablen durch den Benutzer ein Eingabefeld 26 vorgesehen, welches vorteilhaft einen Bildschirm 27 und Eingabetasten aufweist. Es kann zweckmäßig sein, den Bildschirm als Touchscreen auszubilden, so dass Eingabetasten entfallen können. Werden die Informationen zu Betriebsvariablen in anderer Weise an das Bodenbearbeitungsgerät 1.1 übermittelt, kann ein Eingabefeld 26 entfallen.

Es kann vorteilhaft sein, jedes Bodenbearbeitungsgerät 1.1, 1.2 und 1.3 mit einem weiteren Sender/Empfänger 39 auszubilden, der Funksignale oder Infrarotsignale eines weiteren Sender/Empfängers 60 empfängt, der z. B. an der Basisstation 8 vorgesehen sein kann. Diese drahtlose Kommunikationsverbindung zwischen einem Sender/Empfängers 60 der Ladestation und dem Sender/Empfänger 39 des auf dem Bodenbearbeitungsgerätes 1.1 ist vorteilhaft als Funkstrecke oder dgl. ausgebildet. Mögliche Funkstrecken können WLAN-Verbindungen, Bluetooth-Verbindungen, GSM-Verbindungen, NFC-Verbindungen oder dgl. drahtlose Verbindungen, insbesondere Nahfeldverbindungen sein.

Die elektrische Versorgung der Steuereinheit 23 und all ihrer Komponenten wird durch einen bordeigenen Akku 28 gewährleistet. Der Akku 28 ist bevorzugt in das Gehäuse 9 des Bodenbearbeitungsgerätes 1.1 eingeschoben.

Im Betrieb des Bodenbearbeitungssystems S werden die Bodenbearbeitungsgeräte 1.1, 1.2 und 1.3 voneinander unabhängig innerhalb des zu bearbeitenden Arbeitsbereich A durch entsprechende Ansteuerung der Antriebsmotoren 15 und 16 verfahren. Jedes einzelne Bodenbearbeitungsgerät 1.1, 1.2 und 1.3 arbeitet autonom entsprechend der Information einer Betriebsvariablen in seinem Speicher 25.

Im Betrieb der Bodenbearbeitungsgeräte 1.1, 1.2 und 1.3 nimmt die Akkuladung aufgrund der betriebenen elektrischen Verbraucher ab. Die Entladung des Akkus 28 der verschiedenen Bodenbearbeitungsgeräte 1.1, 1.2 und 1.3 kann unterschiedlich sein. Dies kann davon abhängig sein, welche elektrische Leistung das Arbeitswerkzeug 21 sowie der Antrieb 11 des Bodenbearbeitungsgerätes verbraucht.

Muss ein Akku 28 eines Bodenbearbeitungsgerätes 1.1, 1.2 oder 1.3 aufgeladen werden, so fährt die Steuereinheit 23 das entsprechende Bodenbearbeitungsgerät 1.1, 1.2, 1.3 zu einer Ladestation, so z. B. zu einer als Ladestation 30 ausgebildeten Basisstation 8 oder zu einer zusätzlichen Ladestation 31, die auf der Randbegrenzung 2 positioniert sein kann.

Um z.B. eine Ladestation 31 anzufahren, kann die Steuereinheit 23 das entsprechende Bodenbearbeitungsgerät 1.1, 1.2 oder 1.3 zur Randbegrenzung 2 fahren, im gezeigten Ausführungsbeispiel zum Begrenzungsdraht 43 fahren. Die Empfangsspulen 6 und 7 des Bodenbearbeitungsgerätes 1.3 liegen bei einer Fahrt über dem Begrenzungsdraht 43 jeweils auf einer Seite des Begrenzungsdrahtes 43. In einfacher Weise kann so eine Fahrt längs des Begrenzungsdrahtes 43 gewährleistet werden.

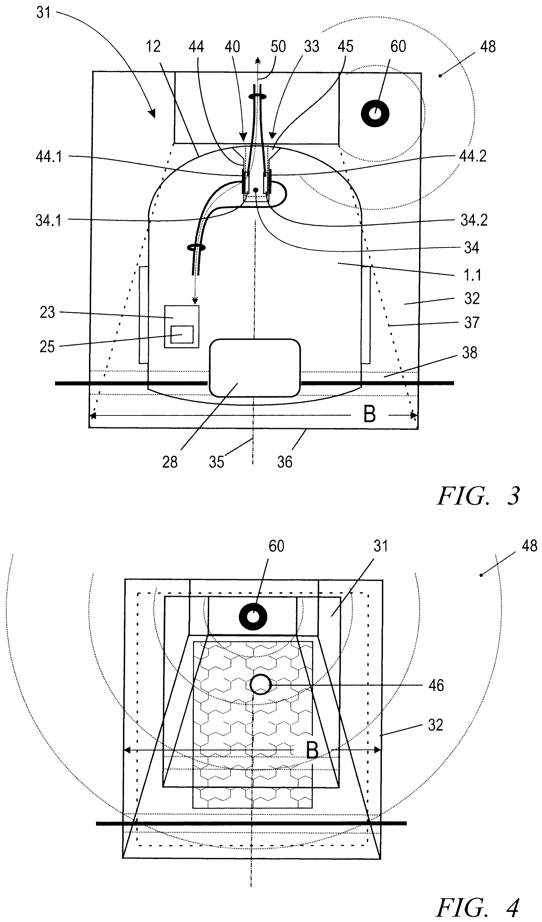

Wie in Fig. 1 gezeigt, weist das Bodenbearbeitungssystem S insbesondere mehrere Ladestationen 30, 31 auf. In Fig. 3 ist eine zusätzlich angeordnete Ladestation 31 in Draufsicht vergrößert dargestellt. Diese Ladestation 31 besteht beispielhaft aus einer Grundplatte 32, die an einem Ende einen Gehäusekopf 33 mit einer Kontaktnase 34 aufweist. Die Kontaktnase 34 ist bevorzugt in einer Längsmittelachse 35 der Ladestation 31 ausgerichtet vorgesehen. Die Grundplatte 32 kann zweckmäßig eine von einer vorderen Kante 36 zur Kontaktnase 34 ansteigende Rampe 37 aufweisen. Quer zur Längsmittelachse 35 kann in der Grundplatte 32 eine Aufnahmerinne 38 ausgebildet sein. Die Aufnahmerinne 38 liegt bevorzugt dem Boden des Arbeitsbereiches A zugewandt. Die Aufnahmerinne 38 erstreckt sich vorzugsweise über die gesamte Breite B der Grundplatte 32.

In Fig. 3 ist - entsprechend zur Darstellung in Fig. 1 - ein auf die Rampe 37 der Ladestation 31 aufgefahrenes Bodenbearbeitungsgerät 1.1 dargestellt, welches in seinem vorderen Bereich 12 eine Kontaktbuchse 44 aufweist. Die Kontaktbuchse 44 liegt - wie auch Fig. 2 zeigt - auf der Längsmittelachse 18 des Gehäuses 9 des Bodenbearbeitungsgerätes 1.1. Die Kontaktbuchse 44 erweitert sich an ihrem äußeren Ende zu einem Kontakttrichter 45, um ein einfaches Einfädeln der Kontaktnase 34 in die Kontaktbuchse 44 zu gewährleisten. In der gezeigten Ladestellung des Bodenbearbeitungsgerätes 1.1 greift die Kontaktnase 34 in die Kontaktbuchse 44 des Bodenbearbeitungsgerätes 1.1 ein und stellt eine elektrische Ladeverbindung 40 zwischen der Ladestation 31 und dem Bodenbearbeitungsgerät 1.1 her. Über die Leistungskontakte der elektrischen Steckverbindung aus Kontaktnase 34 und Kontaktbuchse 44 als Ladeverbindung 40 wird der im Bodenbearbeitungsgerät 1.1 vorgesehene Akku 28 mit einem Ladestrom aufgeladen.

Wie in Fig. 3 dargestellt, weist die Kontaktnase 34 zwei Leistungskontakte 34.1 und 34.2 auf, die mit zugeordneten Leistungskontakten 44.1 und 44.2 der Kontaktbuchse 44 elektrisch kontaktiert sind. Die Leistungskontakte 34.1, 44.1; 34.2, 44.2 liegen bevorzugt auf einander gegenüberliegenden Seiten der Längsmittelachse 35. Über die Leistungskontakte 34.1, 44.1; 34.2, 44.2 fließt der elektrische Ladestrom zum Aufladen des Akkus 28 des Bodenbearbeitungsgerätes 1.1.

Nach der Erfindung ist vorgesehen, über die Ladeverbindung 40 zugleich eine Datenverbindung 50 auszubilden. Bei einer Ausführung der Steckverbindung gemäß Fig. 3 wird die Datenverbindung 50 über die elektrischen Leistungskontakte 34.1 und 44.1 sowie 34.2 und 44.2 hergestellt. Über diese Datenverbindung 50 können vor, während oder nach dem Laden des Akkus 28 Datenpakete von der Ladestation 31 zum Bodenbearbeitungsgerät 1.1 und/oder vom Bodenbearbeitungsgerät 1.1 zur Ladestation 31 übermittelt werden. Zum Bodenbearbeitungsgerät 1.1 übermittelte Datenpakete können in dem Speicher 25 des Bodenbearbeitungsgerätes 1.1 abgespeichert und/oder von der Steuereinheit 23 verarbeitet werden. Dem Bodenbearbeitungsgerät 1.1 können vor, während oder nach dem Laden des Akkus 28 ergänzende Daten zur Betriebsvariablen übermittelt werden, wie z. B. eine angepasste Betriebsdauer des Gerätes, eine geänderte Schnitthöhe (bei einer Ausbildung als Rasenmäher), Daten zu einem Mähplan als Wochenplan oder dgl. ergänzende Betriebsvariablen.

Über die Datenverbindung 50 können ferner Datenpakete von dem Bodenbearbeitungsgerät 1.1 zur Ladestation 31 übermittelt werden, wobei derartige Datenpakete z. B. über eine Funkverbindung 48 an eine übergeordnete Verarbeitungseinheit als Server 80 vorgesehen übermittelt werden können. Zweckmäßig weist die Ladestation 31 hierzu einen Sender/Empfänger 60 auf, der insbesondere drahtlos mit einem übergeordneten Server 80 kommuniziert. Vorteilhaft wird die Funkverbindung 48 als WLAN-Verbindung, Bluetooth-Verbindung, GSM-Verbindung, NFC-Verbindungen oder dgl. drahtlose Verbindungen ausgebildet.

Bilden mehrere Bodenbearbeitungsgeräte 1.1, 1.2 und 1.3 ein Team zur Bearbeitung eines Arbeitsbereiches A, kann dieses Team zweckmäßig über einen übergeordneten Server verwaltet und gesteuert werden. Dabei muss keine permanente Datenverbindung zwischen den Bodenbearbeitungsgeräten 1.1, 1.2 und 1.3 und einem übergeordneten Server 80 oder dgl. zentralen Steuergerät bestehen. Es kann ausreichend sein, wenn die zur Verwaltung und Steuerung der Bodenbearbeitungsgeräte 1.1, 1.2 und 1.3 notwendigen Daten jeweils dann ausgetauscht werden, wenn das Bodenbearbeitungsgerät 1.1 in einer Ladestation 31 - wie in den Fig. 1 und 3 gezeigt - eingefahren ist. Während des Ladevorgangs können Datenpakete zu Betriebsdaten des Bodenbearbeitungsgerätes 1.1 an den Server 80 zur Auswertung ausgetauscht werden. Der Server 80 kann im Gegenzug die zur Verwaltung und Steuerung des Teams an Bodenbearbeitungsgeräten 1.1, 1.2 und 1.3 über den Sender/Empfänger 60 dem Bodenbearbeitungsgerät 1.1, 1.2 und 1.3 Datenpakete übermitteln, wobei das Bodenbearbeitungsgerät 1.1, 1.2, 1.3 die empfangenen Datenpakete in einem Speicher, insbesondere in dem Speicher 25 der Steuereinheit 23, zur weiteren Verwendung ablegt.

In einem nicht erfindungsgemäßen System kann vorgesehen sein, die Ladeverbindung 40 zwischen einem Bodenbearbeitungsgerät 1.1, 1.2 und 1.3 und einer Ladestation 31 als kontaktlose Ladeverbindung 40 zu gestalten. In der Grundplatte 32 ist - wie schematisch in Fig. 4 schematisch angegeben - eine Sendespule 46 vorgesehen, über die ein Ladestrom von der Ladestation 31 auf eine Ladespule im Bodenbearbeitungsgerät 1.1, 1.2, 1.3 übertragen wird. Über diese kontaktlose Ladeverbindung 40 ist vor, während oder nach dem Laden auch eine Datenverbindung für Datenpakete gebildet, über die Datenpakete vom Bodenbearbeitungsgerät 1.1, 1.2, 1.3 auf die Ladestation 31 - und bevorzugt über einen Sender/Empfänger 60 - an einen übergeordneten Server 80 zu übertragen sind. Auch können Datenpakete in Gegenrichtung von der Ladestation 31 auf das in der Ladestation 31 eingefahrene Bodenbearbeitungsgerät 1.1, 1.2, 1.3 übertragen werden. Die Datenverbindung 50 ist bidirektional.

Entlang der Randbegrenzung 2 bzw. des im Ausführungsbeispiel gezeigten Begrenzungsdrahtes 43 können beliebig viele Ladestationen 31 angeordnet werden. Eine Ladestation 31 wird einfach auf der Randbegrenzung 2 bzw. auf dem Begrenzungsdraht 43 positioniert, wobei der Begrenzungsdraht 43 im Bereich der Ladestation 31 unterbrechungsfrei weitergeführt ist. Vorzugsweise verläuft der Begrenzungsdraht 43 in der Aufnahmerinne 38 der Grundplatte 32 der Ladestation 31. Dadurch kann eine vorgegebene Ausrichtung der Ladestation 31 relativ zum Begrenzungsdraht 43 sichergestellt werden. So ist es vorteilhaft, wenn der Begrenzungsdraht unter einem rechten Winkel die Längsmittelachse 35 der Ladestation 31 kreuzt. Das entlang dem Begrenzungsdraht 43 anfahrende Bodenbearbeitungsgerät nähert sich somit in zur Längsmittelachse 35 rechtwinkliger Fahrtrichtung. Dadurch kann ein vorgegebener Fahrweg zum Anfahren einer Ladestation 31 präzise vorgegeben werden.

Wie in Fig. 1 gezeigt, ist auf der Randbegrenzung 2 bzw. dem Begrenzungsdraht 43 eine Ladestation 31 an frei gewähltem Ort positioniert. Der Begrenzungsdraht 43 ist unterbrechungsfrei durch die Ladestation 31 hindurchgeführt.

Über die zwischen der Ladestation 30,31 und dem Bodenbearbeitungsgerät 1.1, 1.2, 1.3 hergestellte Datenverbindung 50 kann mit einem von dem Bodenbearbeitungsgerät 1.1, 1.2, 1.3 gesendeten Datenpaket die Betriebssoftware der Ladestation 30, 31 aktualisiert werden. So kann ein Bodenbearbeitungsgerät 1.1, 1.2, 1.3 z. B. über seinen Sender/Empfänger 39 und eine Funkverbindung 58 mit einem Sender/Empfänger 81 eines übergeordneten Servers 80 verbunden sein. Bei einem Aktualisierungsbedarf z. B. einer Firmware oder einer Betriebssoftware der Ladestation 30, 31 wird der Server 80 diese Aktualisierung an das Bodenbearbeitungsgerät 1.1, 1.2, 1.3 übermitteln. Die empfangenen Datenpakete werden in einem Speicher 25 des Bodenbearbeitungsgerätes 1.1, 1.2, 1.3 abgespeichert. Sobald das Bodenbearbeitungsgerät 1.1, 1.2, 1.3 in eine Ladestation 31 eingefahren und über die Leistungskontakte 34.1, 44.1; 34.2, 44.2 kontaktiert ist, erfolgt ein Versionsabgleich der auf der Ladestation 31 betriebenen Software mit der auf dem Bodenbearbeitungsgerät 1.1, 1.2, 1.3 gespeicherten Software. Ergibt sich ein Aktualisierungsbedarf der Software auf der Ladestation 31, werden die auf dem Bodenbearbeitungsgerät 1.1, 1.2, 1.3 gespeicherten Datenpakete über die Leistungskontakte 34.1, 44.1; 34.2, 44.2 der Ladeverbindung 40 vom Bodenbearbeitungsgerät 1.1, 1.2, 1.3 auf die Ladestation 31 übertragen. Die Übertragung der Datenpakete kann vor, während und/oder nach dem Ladevorgang erfolgen. Das Bodenbearbeitungsgerät 1.1, 1.2, 1.3 ist zugleich Datenträger für eine Aktualisierungssoftware der Ladestationen 30, 31.

Es kann auch zweckmäßig sein, dass ein von der Ladestation 31 über die Datenverbindung 50 der Ladeverbindung 40 gesendetes Datenpaket die Firmware oder Betriebssoftware des Bodenbearbeitungsgerätes 1.1, 1.2, 1.3 aktualisiert. Die Ladestation 31 ist hierzu zweckmäßig über eine Funkverbindung 48 mit einem Server 80 verbunden, der die auf das Bodenbearbeitungsgerät 1.1, 1.2, 1.3 in Datenpaketen zu übertragende Aktualisierungssoftware vom Server 80 empfängt. Sobald das Bodenbearbeitungsgerät 1.1, 1.2, 1.3 in die Ladestation 31 eingefahren und über die Leistungskontakte 34.1, 44.1; 34.2, 44.2 kontaktiert ist, erfolgt ein Versionsabgleich der auf der Ladestation 31 vorgehaltenen Aktualisierungssoftware mit der auf dem Bodenbearbeitungsgerät 1.1, 1.2, 1.3 betriebenen Software. Ergibt sich ein Aktualisierungsbedarf der Software, werden die auf der Ladestation 31 gespeicherten Datenpakete über die Leistungskontakte 34.1, 44.1; 34.2, 44.2 der Ladeverbindung 40 von der Ladestation 31 auf das Bodenbearbeitungsgerät 1.1, 1.2, 1.3 übertragen. Die Ladestation 31 bildet einen Verteiler der Aktualisierungssoftware für alle Bodenbearbeitungsgeräte 1.1, 1.2, 1.3.

## Patentansprüche

1. Bodenbearbeitungssystem aus mindestens einem selbstfahrenden Bodenbearbeitungsgerät (1.1, 1.2, 1.3) mit einem Antrieb (11), einer Steuereinheit (23) und einem bordeigenen Akku (28) zur Energieversorgung des Bodenbearbeitungsgerätes (1.1, 1.2, 1.3), wobei ein Arbeitsbereich (A) des Bodenbearbeitungsgerätes (1.1, 1.2, 1.3) durch eine Randbegrenzung (2) bestimmt ist, und das Bodenbearbeitungsgerät (1.1, 1.2, 1.3) ausgebildet ist, innerhalb des Arbeitsbereichs (A) selbstständig einen Fahrweg (W) zu fahren, und mit mindestens einer Ladestation (31) zum Aufladen des Akkus (28) des Bodenbearbeitungsgerätes (1.1, 1.2, 1.3) über eine elektrische Energie übertragende Ladeverbindung (40), wobei die Ladeverbindung (40) ausgebildet ist, zugleich als Datenverbindung (50) für die Übermittlung von Datenpaketen zu dienen, wobei die Datenverbindung (50) über elektrische Leistungskontakte (34.1, 44.1; 34.2, 44.2) der Ladeverbindung (40) hergestellt ist,
**dadurch gekennzeichnet, dass** das Bodenbearbeitungssystem einen zentralen Server (80) umfasst; die Ladestation (31) und/oder das Bodenbearbeitungsgerät (1.1, 1.2, 1.3) mit dem einem zentralen Server (80) verbunden sind, und der zentrale Server (80) ausgebildet ist, die von dem einem Bodenbearbeitungsgerät (1.1, 1.2, 1.3) an die Ladestation (31) übermittelten Datenpakete zu verarbeiten oder die von der Ladestation (31) an das Bodenbearbeitungsgerät (1.1, 1.2, 1.3) übermittelten Datenpakete zu verarbeiten.

2. Bodenbearbeitungssystem nach Anspruch 1,
**dadurch gekennzeichnet, dass** die Datenverbindung (50) eine bidirektionale Datenverbindung ist.

3. Bodenbearbeitungssystem nach Anspruch 1,
**dadurch gekennzeichnet, dass** die Ladestation (31) ausgebildet ist, Datenpakete zum Bodenbearbeitungsgerät (1.1, 1.2, 1.3) zu übermitteln und das Bodenbearbeitungsgerät (1.1, 1.2, 1.3) ausgebildet ist, die Datenpakete in der Steuereinheit (23) des Bodenbearbeitungsgerätes (1.1, 1.2, 1.3) zu verarbeiten.

4. Bodenbearbeitungssystem nach Anspruch 1,
**dadurch gekennzeichnet, dass** das Bodenbearbeitungsgerät (1.1, 1.2, 1.3) ausgebildet ist, Datenpakete zur Ladestation (31) zu übermitteln.

5. Bodenbearbeitungssystem nach Anspruch 1,
**dadurch gekennzeichnet, dass** die Ladeverbindung (40) als Steckverbindung ausgebildet ist.

6. Bodenbearbeitungssystem nach Anspruch 5,
**dadurch gekennzeichnet, dass** die Steckverbindung aus einer Kontaktnase (34) und einer Kontaktbuchse (44) besteht.

7. Bodenbearbeitungssystem nach Anspruch 6,
**dadurch gekennzeichnet, dass** die Kontaktnase (34) an der Ladestation (31) und die Kontaktbuchse (44) am Bodenbearbeitungsgerät (1.1, 1.2, 1.3) vorgesehen ist.

8. Bodenbearbeitungssystem nach Anspruch 1,
**dadurch gekennzeichnet, dass** die Randbegrenzung (2) durch einen Begrenzungsdraht (43) gebildet ist.

9. Bodenbearbeitungssystem nach Anspruch 8,
**dadurch gekennzeichnet, dass** der Begrenzungsdraht (43) als Drahtschleife (42) verlegt ist.

10. Bodenbearbeitungssystem nach Anspruch 8,
**dadurch gekennzeichnet, dass** eine Basisstation (8) vorgesehen ist, die elektrisch an den Begrenzungsdraht (43) angeschlossen ist, und die Basisstation (8) ausgebildet ist, auf dem Begrenzungsdraht (43) ein Drahtsignal (41) zu senden, wobei das auf dem Begrenzungsdraht (43) gesendete Drahtsignal (41) in einer Empfangsspule (6, 7) des Bodenbearbeitungsgerätes (1.1, 1.2, 1.3) ein Empfangssignal induziert, und die Steuereinheit (23) ausgebildet ist, das Empfangssignal zu verarbeiten und zur Steuerung des Bodenbearbeitungsgerätes (1.1, 1.2, 1.3) auf einem Fahrweg (W) zu verwenden.

11. Bodenbearbeitungssystem nach Anspruch 1,
**dadurch gekennzeichnet, dass** die Basisstation (8) als Ladestation (30) ausgebildet ist.

12. Bodenbearbeitungssystem nach Anspruch 1,
**dadurch gekennzeichnet, dass** im Arbeitsbereich (A) mehrere autonom arbeitende Bodenbearbeitungsgeräte (1.1, 1.2, 1.3) angeordnet sind.

13. Bodenbearbeitungssystem nach Anspruch 1,
**dadurch gekennzeichnet, dass** das Bodenbearbeitungsgerät (1.1, 1.2, 1.3) ein selbstfahrender Rasenmäher (10) ist.

14. Bodenbearbeitungssystem nach Anspruch 1,
**dadurch gekennzeichnet, dass** ein von dem Bodenbearbeitungsgerät (1.1, 1.2, 1.3) über die Datenverbindung (50) gesendetes Datenpaket die Betriebssoftware der Ladestation (30) aktualisiert.

15. Bodenbearbeitungssystem nach Anspruch 1,
**dadurch gekennzeichnet, dass** ein von der Ladestation (30) über die Datenverbindung (50) gesendetes Datenpaket die Betriebssoftware des Bodenbearbeitungsgerätes (1.1, 1.2, 1.3) aktualisiert.

## Claims

1. Ground working system composed of at least one self-driving ground working device (1.1, 1.2, 1.3) having a drive (11), a control unit (23) and an on-board rechargeable battery (28) for supplying energy to the ground working device (1.1, 1.2, 1.3), wherein an operating region (A) of the ground working device (1.1, 1.2, 1.3) is determined by an edge boundary (2), and the ground working device (1.1, 1.2, 1.3) is designed to travel a travelling path (W) independently within the operating region (A), and having at least one charging station (31) for charging the rechargeable battery (28) of the ground working device (1.1, 1.2, 1.3) by means of a charging connection (40) that transmits electrical energy, wherein the charging connection (40) is designed to serve simultaneously as a data connection (50) for transmitting data packets, wherein the data connection (50) is established by means of electrical power contacts (34.1, 44.1; 34.2, 44.2) of the charging connection (40),
**characterized in that** the ground working system comprises a central server (80); the charging station (31) and/or the ground working device (1.1, 1.2, 1.3) are connected to the central server (80) and the central server (80) is designed to process the data packets transmitted by the ground working device (1.1, 1.2, 1.3) to the charging station (31) or to process the data packets transmitted by the charging station (31) to the ground working device (1.1, 1.2, 1.3).

2. Ground working system according to Claim 1,
**characterized in that** the data connection (50) is a bidirectional data connection.

3. Ground working system according to Claim 1,
**characterized in that** the charging station (31) is designed to transmit data packets to the ground working device (1.1, 1.2, 1.3) and the ground working device (1.1, 1.2, 1.3) is designed to process the data packets in the control unit (23) of the ground working device (1.1, 1.2, 1.3).

4. Ground working system according to Claim 1,
**characterized in that** the ground working device (1.1, 1.2, 1.3) is designed to transmit data packets to the charging station (31).

5. Ground working system according to Claim 1,
**characterized in that** the charging connection (40) is designed as a plug connection.

6. Ground working system according to Claim 5,
**characterized in that** the plug connection consists of a contact tab (34) and a contact socket (44).

7. Ground working system according to Claim 6,
**characterized in that** the contact tab (34) is provided on the charging station (31) and the contact socket (44) is provided on the ground working device (1.1, 1.2, 1.3).

8. Ground working system according to Claim 1,
**characterized in that** the edge boundary (2) is formed by a boundary wire (43).

9. Ground working system according to Claim 8,
**characterized in that** the boundary wire (43) is laid as a wire loop (42).

10. Ground working system according to Claim 8,
**characterized in that** a base station (8) is provided, which is electrically connected to the boundary wire (43), and the base station (8) is designed to transmit a wire signal (41) on the boundary wire (43), wherein the wire signal (41) transmitted on the boundary wire (43) induces a reception signal in a reception coil (6, 7) of the ground working device (1.1, 1.2, 1.3), and the control unit (23) is designed to process the reception signal and to use same in order to control the ground working device (1.1, 1.2, 1.3) on a travelling path (W).

11. Ground working system according to Claim 1,
**characterized in that** the base station (8) is designed as a charging station (30).

12. Ground working system according to Claim 1,
**characterized in that** a plurality of autonomously operating ground working devices (1.1, 1.2, 1.3) are arranged in the operating region (A).

13. Ground working system according to Claim 1,
**characterized in that** the ground working device (1.1, 1.2, 1.3) is a self-driving lawnmower (10).

14. Ground working system according to Claim 1,
**characterized in that** a data packet sent by the ground working device (1.1, 1.2, 1.3) via the data connection (50) updates the operating software of the charging station (30).

15. Ground working system according to Claim 1,
**characterized in that** a data packet sent by the charging station (30) via the data connection (50) updates the operating software of the ground working device (1.1, 1.2, 1.3).

## Revendications

1. Système de travail de sol pourvu d'au moins un appareil de travail de sol automoteur (1.1, 1.2, 1.3) comprenant un entraînement (11), une unité de commande (23) et une batterie embarquée (28) destinée à fournir de l'énergie à l'appareil de travail de sol (1.1, 1.2, 1.3), une zone de travail (A) de l'appareil de travail de sol (1.1, 1.2, 1.3) étant définie par une limite de bord (2), et l'appareil de travail de sol (1.1, 1.2, 1.3) étant conçu pour rouler indépendamment suivant un chemin de roulement (W) situé à l'intérieur de la zone de travail (A), et comprenant au moins une station de charge (31) destinée à charger la batterie (28) de l'appareil de travail de sol (1.1, 1.2, 1.3) par le biais d'une liaison de charge (40) qui transmet l'énergie électrique, la liaison de charge (40) étant conçue pour servir en même temps de liaison de données (50) destinée à la transmission de paquets de données, la liaison de données (50) étant réalisée par le biais de contacts de puissance électriques (34.1, 44.1 ; 34.2, 44.2) de la liaison de charge (40),
**caractérisé en ce que** le système de travail de sol comprend un serveur central (80) ; la station de charge (31) et/ou l'appareil de travail de sol (1.1, 1.2, 1.3) sont reliés au serveur central (80), et le serveur central (80) est conçu pour traiter les paquets de données transmis de l'appareil de travail de sol (1.1, 1.2, 1.3) à la station de charge (31) ou pour traiter les paquets de données transmis de la station de charge (31) à l'appareil de travail de sol (1.1, 1.2, 1.3).

2. Système de travail de sol selon la revendication 1,
**caractérisé en ce que** la liaison de données (50) est une liaison de données bidirectionnelle.

3. Système de travail de sol selon la revendication 1,
**caractérisé en ce que** la station de charge (31) est conçue pour transmettre des paquets de données à l'appareil de traitement de sol (1.1, 1.2, 1.3) et l'appareil de traitement de sol (1.1, 1.2, 1.3) est conçu pour traiter les paquets de données dans l'unité de commande (23) de l'appareil de traitement de sol (1.1, 1.2, 1.3).

4. Système de travail de sol selon la revendication 1,
**caractérisé en ce que** l'appareil de travail de sol (1.1, 1.2, 1.3) est conçu pour transmettre des paquets de données à la station de charge (31).

5. Système de travail de sol selon la revendication 1,
**caractérisé en ce que** la liaison de charge (40) est conçue sous la forme d'une liaison enfichable.

6. Système de travail de sol selon la revendication 5,
**caractérisé en ce que** la liaison enfichable comprend un taquet de contact (34) et une douille de contact (44).

7. Système de travail de sol selon la revendication 6,
**caractérisé en ce que** le taquet de contact (34) est prévue sur la station de charge (31) et la douille de contact (44) est prévue sur l'appareil de travail de sol (1.1, 1.2, 1.3).

8. Système de travail de sol selon la revendication 1,
**caractérisé en ce que** la limite de bord (2) est formée par un fil de délimitation (43).

9. Système de travail de sol selon la revendication 8,
**caractérisé en ce que** le fil de délimitation (43) est posé sous la forme d'une boucle de fil (42).

10. Système de travail de sol selon la revendication 8,
**caractérisé en ce qu'**une station de base (8) est prévue qui est raccordée électriquement au fil de délimitation (43), et la station de base (8) est conçue pour émettre un signal filaire (41) sur le fil de délimitation (43),
le signal filaire (41) émis sur le fil de délimitation (43) induisant un signal de réception dans une bobine de réception (6, 7) de l'appareil de traitement de sol (1.1, 1.2, 1.3), et l'unité de commande (23) étant conçue pour traiter le signal de réception et pour commander l'appareil de travail de sol (1.1, 1.2, 1.3) sur un chemin de roulement (W).

11. Système de travail de sol selon la revendication 1,
**caractérisé en ce que** la station de base (8) est conçue comme une station de charge (30).

12. Système de travail de sol selon la revendication 1,
**caractérisé en ce qu'**une pluralité d'appareils de travail de sol autonomes (1.1, 1.2, 1.3) sont disposés dans la zone de travail (A).

13. Système de travail de sol selon la revendication 1,
**caractérisé en ce que** l'appareil de travail de sol (1.1, 1.2, 1.3) est une tondeuse à gazon automotrice (10).

14. Système de travail de sol selon la revendication 1,
**caractérisé en ce qu'**un paquet de données envoyé par l'appareil de travail de sol (1.1, 1.2, 1.3) par le biais de la liaison de données (50) actualise le logiciel d'exploitation de la station de charge (30).

15. Système de travail de sol selon la revendication 1,
**caractérisé en ce qu'**un paquet de données envoyé par la station de charge (30) par le biais de la liaison de données (50) actualise le logiciel d'exploitation de l'appareil de travail de sol (1.1, 1.2, 1.3).
